# EUROPEAN PATENT APPLICATION

(11) **EP 1 118 440 A2**
(43) Date of publication of application: **25.07.2001**
(21) Application number: 00126146.0
(22) Date of filing: 30.11.2000
(51) Int. Cl.: B28B 7/38, B28B 7/36

(54) **Detachable film to be particularly used the production of slabs made of stone agglomerates or the like**

(30) Priority: 17.12.1999 IT VR990073
(71) Applicant: Brutti, Franco, 37121 Verona (IT)
(72) Inventor: Brutti, Franco, 37121 Verona (IT)
(74) Representative: Savi, Alberto

(57) **Abstract**

A film according to the present invention optimizes the productive process of slabs made of marble agglomerates because this film solves one of the main problems that arise in this kind of production, namely, the removal of the protective material such as paper, rubber etc. from the slab when the baking phase is concluded and before the beginning of the subsequent phases in which the slab is finished off.

Basically, the detachable film in question is made of polypropylene (both copolymers and homopolymers) in its several forms such as cast, extruded, coextruded, mono-biorientated forms or further forms, or other similar material derived from polypropylene.

Unlike polyester, polypropylene accomplishes its antiadhesive function very well on the marble agglomerate and therefore, polypropylene is used in the production of marble agglomerate.

## Description

The present invention proposes to use a detachable polypropylene film in which the polypropylene can take any of its several forms such as cast, extruded, coextruded, orientated form or further forms. In case, the detachable polypropylene film can be coupled with paper or another similar support. In this way, it is possible to obtain a very inexpensive protective material which can be particularly used in the production of slabs made of marble, sand or quartz agglomerates or the like.

The support in question is useful in particular when it is used in the productive processes of marble, sand or quartz agglomerates or the like because the detachable film according to the present invention facilitates the removal of the paper from the agglomerate slab, the paper being used as a protective material in the formation and the baking/polymerization of the slab itself.

By using the film according to the present invention it is possible to optimize the productive process of marble agglomerate slabs because this film solves one of the main problems that arise in this kind of production, namely, the removal of the protective material such as paper, rubber etc. from the slab when the baking phase is concluded and before the beginning of the subsequent phases in which the slab is finished off.

As is known, in the field of covering materials there is a growing utilization of tiles and slabs obtained from agglomerates of stone material. Such tiles and slabs can replace the products in natural stone on obtaining the same results and even better results.

The technique for obtaining agglomerate slabs consists in positioning a paper or rubber sheet to be used as a protective material on a specific conveyor belt. A mould or frame is put on the sheet. Then, a certain quantity of a mixture is poured in the mould or frame. The mixture consists in general of stone or marble scales or sand or other natural or semimanufactured material pieces which have been mixed together with a suitable resinous binder or other suitable binder.

Another protective sheet is put on the mixture.

Then, the mixture is pressed and inserted in an oven.

When the baking process is finished, we have obtained a polymerized product which is ready for the subsequent finishing-off phases.

The main disadvantage of the aforesaid technique arises when it is necessary to remove the upper and lower sheets from the baked agglomerate slab. As a matter of fact, this operation is very difficult because during the polymerization the mixture adheres to both sheets owing to their natural porosity.

The prior art knows solutions according to which it is possible either to avoid the adhesion to the sheets or at least to limit the difficulties in the removing phase of the paper or rubber support. In such solutions, a particular type of paper is used, namely, a paper on which a polyester layer is laid. The polyester layer is applied on one of the two surfaces by means of a coupling or extruding system.

However, the measures taken proved inadequate because the polyester is similar to the resinous glues contained in the agglomerate mixture and the detachment of the paper support proved very difficult despite the polyester covering. Indeed, it is necessary to mechanically remove the surface part of the obtained agglomerate by utilizing tools or cutters or sand-blasting machines in order to remove the paper support.

The aim of the present invention is to obtain an agglomerate slab deprived of the other materials such as paper or rubber that have contributed to the formation of the slab but are foreign to it.

The present invention eliminates the disadvantages arising when it is necessary to detach the paper from slabs made of stone or marble agglomerates or the like.

The aim is reached by utilizing a detachable film of new conception. This detachable film is not made of a material similar to the agglomerate mixture and therefore, the removal of the film is easier.

This solution involves a clear improvement in the technique for producing agglomerates since by utilizing this technique it is possible to obtain a perfect detachment of the protective support at the end of the cycle of production, the materials in question being reciprocally repellent.

An immediate advantage of the present invention refers to a shortening of the slab finishing-off time at the end of the baking and drying processes thanks to the remarkable easiness of detachment of the new film. In addition, there is a global saving in the costs of production.

The utilization of the film according to the present invention avoids the necessity of using a special equipment such as a sand-blasting machine which is particularly expensive as concerns running and upkeep.

Besides, the necessity of removing material in order to calibrate the thickness of the slab is eliminated or at least reduced since unlike paper, the detachable film is not subjected to the effects of the environmental humidity and does not form folds which compel to remove a greater quantity of material in order to obtain a level slab showing a constant thickness.

All the above-described aims and advantages are reached by the present invention with a detachable film to be used in particular for the production of slabs in stone agglomerates or the like, characterized by the fact of being formed by a sheet consisting of at least a polypropylene layer (copolymers and homopolymers) in its several forms such as cast, extruded, coextruded, mono-biorientated forms or further forms, or other similar material, and that the layer of these materials is directly used in the form of a film showing a suitable thickness, otherwise the layer is applied on at least one of the sides of the paper support but it can be applied also on both sides of the paper support by means of a suitable coupling or extruding system.

In case of a coupling of paper and detachable film, a layer of adhesive material such as glue or the like is applied between the paper and the detachable film while concerning extrusion, the polypropylene is directly poured on the surface and then, it is shaved with suitable finishing-off systems.

Further aims and advantages of the present invention will be better understood from the following description, supplied as a non-limiting example of some possible realizations of a detachable film according to the present invention and possible uses thereof.

As described above, the detachable film according to the present invention is designed for the production of agglomerates made of stone, marble or stone material in general. The detachable film derives from a feed spool and can be directly utilized in the production of agglomerates of stone material. Otherwise, the detachable film can be coupled with a paper film or another appropriate material acting as a support for the detachable film.

The detachable film is made of polypropylene (both copolymers and homopolymers) in its several forms such as cast, extruded, coextruded, mono- biorientated forms or further forms, or other similar material derived from polypropylene. Unlike polyester, polypropylene accomplishes its antiadhesive function very well on the marble agglomerate and therefore, polypropylene is used in the production of marble agglomerate.

For instance, there is the possibility of applying a detachable film consisting of one or more of the aforesaid materials on a paper sheet by means of the extrusion. In this case, the fluid polypropylene is cast from an upper extruder and meets with a shaving device as the sheet is fed. The shaving device distributes and levels the polypropylene so as to obtain the wished polypropylene thickness.

In addition, there is the possibility of coupling a paper sheet deriving from a spool with a film made of a detachable polypropylene-based material coming from another spool. In this case, since it is a "cold application", a suitable adhesive material must be used so that the coupled layers are attached to one another in a stable manner. To this end, a layer of glue or other appropriate adhesive material is applied between the sheet and the detachable film by means of a suited system.

Besides, the possibility of applying detachable polypropylene films on the paper support enables to cover both sides of the sheet so as to obtain an absolutely flat sheet even when the environmental conditions are difficult.

The utilization of the so-described sheet falls into the conventional utilizations. However, in this case there is a substantial difference between this invention and the known solutions, that is a perfect detachment of the sheet at the end of the cycle of production.

In fact, the polypropylene sheet according to the present invention is positioned on a conveyor belt. In case, the polypropylene sheet is provided with a paper layer. Then, a frame is put thereon and a certain quantity of agglomerated mixture is poured in the mould or frame.

At the end of the cycle of production, after the pressing and baking phases, the mixture can be used. It is sufficient to remove with the greatest ease the detachable supporting film. In this way, it is possible to eliminate the whole paper removing phase that was necessary in the known processes.

A technician of this field can provide other possibilities of application of the polypropylene-based detachable material and obtain solutions which are to be considered as included in the scope of protection of the present invention, as defined by the following claims.

## Claims

1. Detachable film, in particular for the production of slabs made of stone agglomerates or the like, characterized by the fact of being formed by a polypropylene layer (copolymers and homopolymers) in its several forms such as cast, extruded, coextruded, mono-biorientated forms or further forms, and by the fact that the detachable film is used directly or it is applied on at least one or both sides of the paper support or the like by means of a suitable coupling or extruding system.

2. Detachable film, in particular for the production of slabs made of stone agglomerates or the like as claimed in the foregoing claim, characterized by the fact that the polypropylene film in its several forms such as cast, extruded, coextruded, mono- biorientated forms or further forms is coupled with at least one side of the paper support in order to make the support thicker in the phase of production of the agglomerate.

3. Detachable film, in particular for the production of slabs made of stone agglomerates or the like as claimed in the foregoing claims, characterized by the fact that in case the application of the detachable film is accomplished through the extrusion, the detachable fluid material is cast from an upper extruder and meets with a shaving device as the sheet is fed, which shaving device distributes and levels the polypropylene so as to obtain the wished polypropylene thickness.

4. Detachable film, in particular for the production of slabs made of stone agglomerates or the like as claimed in the foregoing claims, characterized by the possibility of coupling a paper sheet deriving from a spool with a polypropylene film coming from another spool.

5. Detachable film, in particular for the production of slabs made of stone agglomerates or the like as claimed in the foregoing claims, characterized by the fact that since the application of the polypropylene film is a "cold" application, a suitable adhesive material must be used so that the coupled layers are attached to one another in a stable manner.
